# EUROPEAN PATENT APPLICATION

(11) **EP 4 645 759 A1**
(43) Date of publication of application: **05.11.2025**
(21) Application number: 24173174.4
(22) Date of filing: 29.04.2024
(51) Int. Cl.: H04L 9/40, H04W 12/63, H04W 12/60, G06F 21/40, H04W 12/065, H04W 12/06

(54) **AUTOMATIC DEVICE AUTHENTICATION**

(71) Applicant: British Telecommunications public limited company, London E1 8EE (GB)
(72) Inventor: The designation of the inventor has not yet been filed
(74) Representative: British Telecommunications public limited company Intellectual Property Department

(57) **Abstract**

An authentication method for authenticating a first device in a network of devices, the method comprising: performing an authentication procedure to attempt to authenticate the first device; determining that the authentication procedure has failed to authenticate the first device; determining that a second device is connected to the first device; requesting authentication of the first device by the second device; receiving an authentication response from the second device; and if the second device verifies the first device in response to receiving the authentication response, authenticating the first device.

## Description

### TECHNICAL FIELD

Aspects of the present disclosure relate to continuous authentication of user devices. More specifically, aspects relate to continuous authentication of user devices in a network of devices.

### BACKGROUND

Conventionally, continuous authentication of a user device collects and compares biometric information continuously and compares it to a genuine user profile in real-time. Continuous authentication can transparently and conveniently authenticate users beyond the point-of-entry and quickly identify imposters if they begin to use the device. Devices need to be authenticated before being part of a secure environment. This authentication is known as knowledge-based (human dependent) authentication which acts as the primary fallback mechanism, i.e., if a device is disconnected from its network due to a failed authentication, a human user is required to authenticate the device in order for it to be reconnected to the network.

The examples described herein are not limited to examples which solve problems mentioned in this background section.

### SUMMARY

Examples of preferred aspects and embodiments of the invention are as set out in the accompanying independent and dependent claims.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

According to a first aspect there is a computer-implemented method for authenticating a first device in a network of devices, the method comprising: performing an authentication procedure to attempt to authenticate the first device; determining that the authentication procedure has failed to authenticate the first device; determining that a second device is connected to the first device; requesting authentication of the first device by the second device; receiving an authentication response from the second device; and if the second device verifies the first device in response to receiving the authentication response, authenticating the first device.

In some examples of the computer-implemented method, the second device has an authentication strength greater than or equal to the first device's authentication strength.

In some examples of the computer-implemented method, the authentication strength of a device is based on at least one device metric.

In some examples of the computer-implemented method, the at least one device metric comprises any of channel state information, device-configuration, battery information, clock offset and/or clock skewness.

In some examples of the computer-implemented method, the first and second devices are different.

In some examples of the computer-implemented method, the second device is selected from a plurality of devices based on one or both of: proximity to the first device, an authentication strength.

In some examples of the computer-implemented method, the proximity of the first device is determined by Bluetooth and/or GPS.

According to a second aspect, there is a computer system including a processor and memory storing computer program code for performing the steps of:
performing an authentication procedure to attempt to authenticate the first device; determining that the authentication procedure has failed to authenticate the first device; determining that a second device is connected to the first device; requesting authentication of the first device by the second device; receiving an authentication response from the second device; and if the second device verifies the first device in response to receiving the authentication response, authenticating the first device.

In some examples of the computer system, the second device has an authentication strength greater than or equal to the first device's authentication strength.

In some examples of the computer system, the authentication strength of a device is based on at least one device metric.

In some examples of the computer system, the at least one device metric comprises any of channel state information, device-configuration, battery information, clock offset and/or clock skewness.

In some examples of the computer system, the first and second devices are different.

In some examples of the computer system, the second device is selected from a plurality of devices based on one or both of: proximity to the first device, and authentication strength.

In some examples of the computer system, the proximity of the first device is determined by Bluetooth and/or GPS.

According to a third aspect, there is a computer program element comprising computer program code to, when loaded into a computer system and executed thereon, cause the computer to perform the steps: performing an authentication procedure to attempt to authenticate the first device; determining that the authentication procedure has failed to authenticate the first device; determining that a second device is connected to the first device; requesting authentication of the first device by the second device; receiving an authentication response from the second device; and if the second device verifies the first device in response to receiving the authentication response, authenticating the first device.

In some examples of the computer program element, the second device has an authentication strength greater than or equal to the first device's authentication strength.

In some examples of the computer program element, the authentication strength of a device is based on at least one device metric.

In some examples of the computer program element, the at least one device metric comprises any of channel state information, device-configuration, battery information, clock offset and/or clock skewness.

In some examples of the computer program element, the first and second devices are different.

In some examples of the computer program element, the second device is selected from a plurality of devices based on one or both of: proximity to the first device, and authentication strength.

In some examples of the computer program element, the proximity of the first device is determined by Bluetooth and/or GPS.

### BRIEF DESCRIPTION OF THE DRAWINGS

The accompanying drawings illustrate various examples. The skilled person will appreciate that the illustrated element boundaries (e.g., boxes, groups of boxes, or other shapes) in the drawings represent one example of the boundaries. It may be that in some examples, one element may be designed as multiple elements or that multiple elements may be designed as one element. Common reference numerals are used throughout the figures, where appropriate, to indicate similar features.
Figures 1A and 1B are flowcharts illustrating example methods;
Figure 2 schematically illustrates an example system; and
Figure 3 schematically illustrates an example data processing system.

### DETAILED DESCRIPTION

The following description is made for the purpose of illustrating the general principles of the present technology and is not meant to limit the inventive concepts claimed herein. As will be apparent to anyone of ordinary skill in the art, one or more or all of the particular features described herein in the context of one embodiment are also present in some other embodiment(s) and/or can be used in combination with other described features in various possible combinations and permutations in some other embodiment(s).

Continuous authentication has become an established form of authentication in the last decade due to improved sensing, processing and machine learning capabilities on user devices for user authentication. Continuous authentication *continuously* collects and compares biometric (behavioural and/or physiological) information and compares it to a genuine user profile in *real-time.* The benefit of continuous authentication is that it can transparently and conveniently authenticate users beyond the point-of-entry and quickly identify imposters/threats if they begin to use the user device.

In order for a device (e.g., an electronic device such as a laptop, smartphone, printer, etc.) to be part of a highly secure environment/network, it must be authenticated beforehand. Device authentication between sensor nodes and gateways has become a practical and fundamental security issue in loT (internet of things) environments.

The approach of the present invention is to move away from a reliance on knowledge-based (human dependent) and data-driven (gateway) authentication as a primary fallback mechanism when a device is unauthenticated. The present invention proposes a continuous authentication of a first device via a second device within a network without the involvement of a human-in-the-loop and/or gateway.

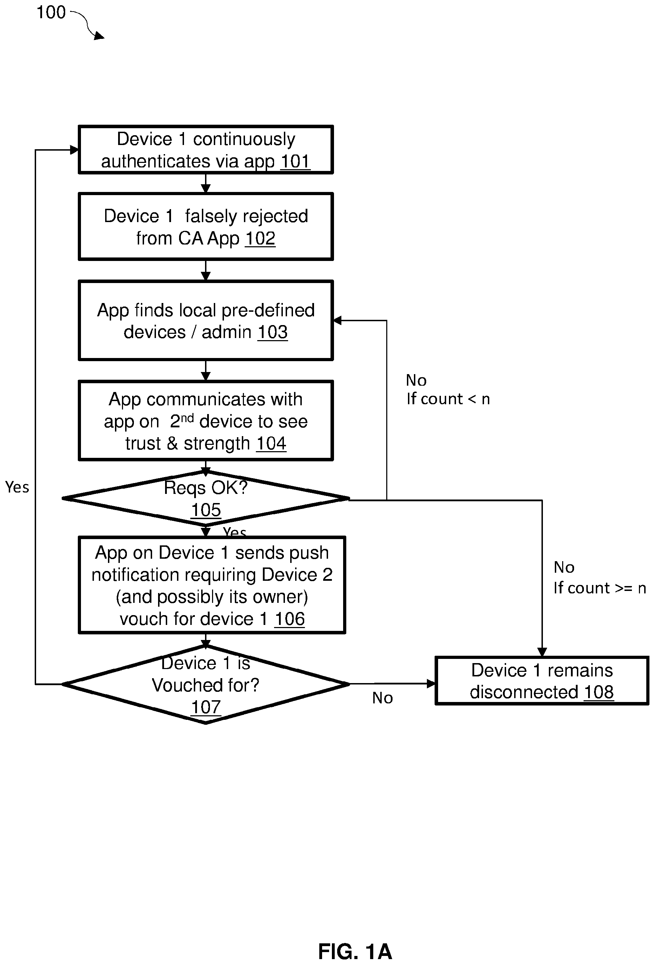

A flowchart of an exemplary method 100 is shown in Fig. 1A. In step 101, a first network device (also referred to as device 1) is continuously authenticated via an application and a predefined custom fallback list of devices. In step 102, the first network device with a continuous authentication application and a predefined custom fallback list of device locks due to a mismatch of continuous device metrics. This mismatch may be a false rejection.

In step 103, the application checks the predefined list of fallback devices. In step 104, the application on the first device attempts to find proximate devices (e.g. with Bluetooth or GPS). Contact may be made via an internet connection between the applications on the fallback devices with the first device to check (step 105) if any of the devices fulfil a set of predefined requirements (e.g. equal or greater authentication strength and/or trusted continuous biometrics) as fallback.

If a proximate device fulfils the requirements, then method proceeds to step 106 where a push notification is sent to the selected fallback device (also referred to as device 2). The selected fallback device is selected by it responding within a predetermined time limit, otherwise another fallback device will be contacted. If a proximate device does not fulfil the requirements, the method repeats from step 103 such that one or more other proximate devices are checked until one is identified, none are identified, or a maximum number of device checks are exceeded (leading to step 108 whereby the first device remains disconnected).

In step 107, the fallback device (device 2) verifies that the first device (device 1) is the device that it claims such that the first device is allowed back into the network. Access is given back to device 1 after verification from a fallback device. If the fallback device does not verify the first device, the first device remains disconnected.

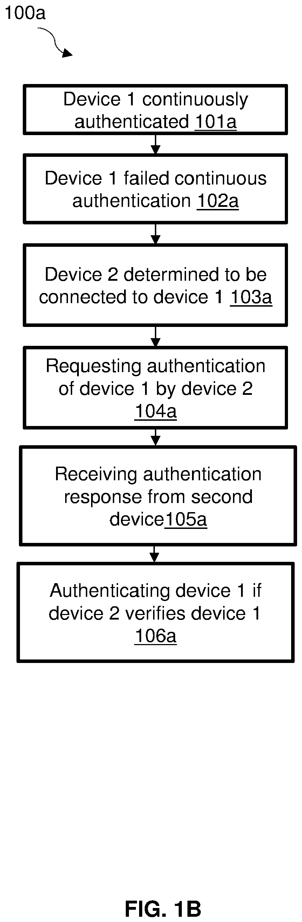

A flowchart of a second exemplary method 100a of continuous authentication of a first device in a network of devices is shown in Fig. 1B. In step 101a, a first device is continuously authenticated (e.g., via a continuous authentication application and a predefined custom fallback list of devices). In step 102a, the first device fails to be authenticated by the continuous authentication application. In some examples, this is due to a mismatch of device metrics between the continuous authentication application and the device in question. This mismatch may be a false rejection.

In step 103a, a second trusted device is determined to be connected to the first device. In some examples, the second trusted device is selected based on having a higher authentication strength than the first device. In some examples, contact may be made via an internet connection between the applications on the fallback devices with the first device to check if any of the devices fulfil a set of predefined requirements (e.g. equal or greater authentication strength and/or trusted continuous biometrics) as fallback.

In step 104a, the second device requests authentication of the first device. In step 105a, the authentication response is received by the first device from the second device, and based on whether the authentication response verifies or rejects the first device, the first device is authenticated or rejected, respectively, by the network.

In step 106a, the fallback device (device 2) verifies that the first device (device 1) is the device that it claims to be such that the first device is allowed back into the network. Access is given back to device 1 after verification from a fallback device. If the fallback device does not verify the first device, the first device remains unauthenticated.

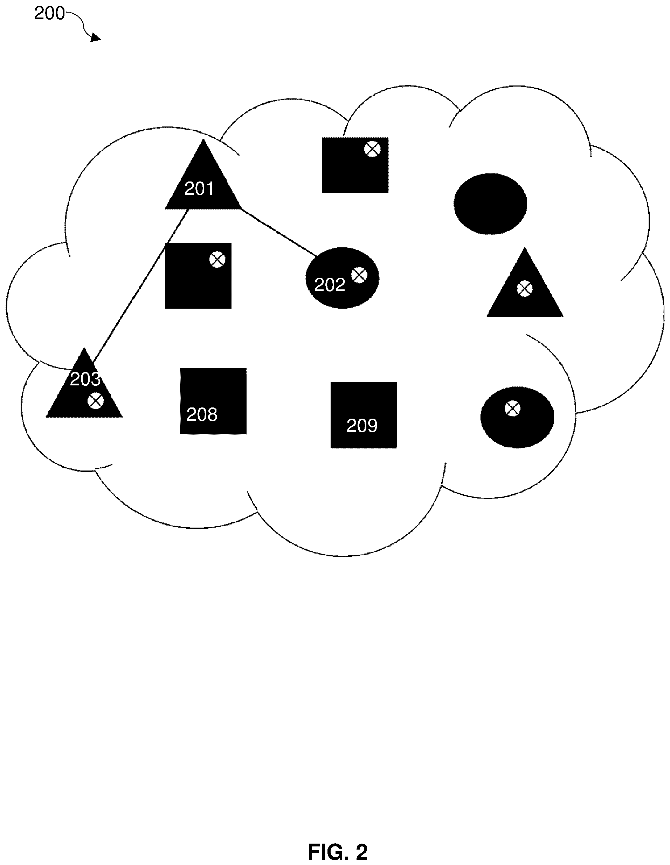

Figure 2 shows a schematic example 200 of a network of devices which are authenticated continuously.

If a device, A_{d} 201, in a network in use via continuous authentication accidently/falsely is locked (and/or disconnected) from the network due to a continuous authentication mismatch, then fallback authentication is required. Instead of reverting to known fallback authentication methods such as human-in-the-loop authentication, one example of the present invention relies on a trusted device, B_{d} 202, 203, preselected by a network administrator or a trustworthy entity (other devices/administrator) such that the device, B_{d}, can provide confirmation, after prompted (given that it is continuously authenticated to the same or greater standard of the original device, A_{d}), that the device, A_{d}, is in use by the network/environment.

In some examples, the administrator may pre-define multiple devices that can be a fallback device. In this case, the chosen fallback device would be based on the closest device available based on technologies including wireless technologies, e.g., Bluetooth or Zigbee, and/or navigation technologies, e.g., GPS. In some examples, before a device is used as the fallback device (device 2), a check is initially conducted that requires the fallback device be continuously authenticated to a standard that meets or exceeds the requirements on the initial device. This can be done by two separate metrics; Authentication Strength (AS) and Continuous Authentication Trust (CAT). AS refers to the strength of the continuous authentication scheme as defined by its accuracy, for example, device feature-based continuous authentication will often provide greater accuracy than device-configuration based authentication and therefore the AS will be higher. In some examples, the AS also incorporates scores of a spoof risk (e.g., lowering the AS if the accuracy is high but spoof risk is also high). The CAT will be based on the match level of the current continuously collected features to a device's profile containing previously collected features during a training phase. Implementing this solution would require that a program is written for the devices that would be involved, both the authenticating device and the fallback devices. This could be implemented in any programming language (e.g., python, Java) as an application or a desktop program. Each device will collect some device-metrics depending on available sensors such that each device can be continuously authenticated. These device-metrics may include device configuration, channel state information (CSI), etc. In some examples, an administrator will authenticate one or more device-metrics in real-time by comparing them to a pre-trained profile stored locally for the device. Machine learning techniques (such as artificial neural networks (ANNS)) could be applied to each of the device-metrics such that comparison of device metrics can be based on robust techniques. A threshold may be chosen to determine if a device is deemed as authenticated based on the scores produced by a classification system. In some examples, a score equal or above the threshold implies that the device in question is trusted and can therefore authenticate the locked device. As shown in Fig. 2, a first trusted device 202 is identified along with a second trusted device 203. Choosing between a first 202 and second 203 trusted device may be dependent on the AS and CAT of each trusted device. For example, if the second trusted device 203 has a higher authentication score than the first trusted device 202, but is located further away (resulting in a weaker connection via, for example, Bluetooth), then the first trusted device 202 may be selected to authenticate the first device 201 in order for it to reliably request an authentication response.

There are security benefits with this approach because if attempts are made for a fallback attack to bypass continuous authentication, the malicious actor would then have to additionally break the continuous authentication on another device. Furthermore, if the fallback was a second device, the second device would be receive information, via the network, that the device not authenticated is not a genuine device and respond to a prompt to say the device should not be permitted access back to the network.

Table 1 presents the list of some device features that can be used for continuous authentication of a device. For a fallback authentication approach, a set of features can be used for continuous authentication by a gateway in the environment, and another set of features can be used by the other devices within the environment for fallback authentication. For example, three features are used for continuous authentication and five other features are used for fallback authentication by devices.

**Table 1. Exemplary device metrics for continuous authentication.**

| FEATURES / PARAMETERS IDENTIFIED FOR CONTINUOUS AUTHENTICATION (Not Limited to) | | | | |
|---|---|---|---|---|
| TYPE | SUB-TYPE | VARIATIONS | FEATURES / PARAMETERS | |
| HARDWAR E | PHYSICAL / INTRINSIC CHARACTERISTIC | Hardware imperfection | · | Sensor Defects |
| | | | · | Calibration matrices |
| | | | · | IC defects |
| | | | · | PUF |
| | | | · | Memory defects |
| | | | · | Magnetic sensor |
| | | | · | Phase offset |
| | | | · | I/Q imbalance |
| | | | · | Carrier frequency offset |
| | | | · | Turn on/off transient signals |
| | OPERATIONAL CHARACTERISTIC | Clock | · | Clock skewness |
| | | | · | Clock Drift |
| | | | · | Clock Offset |
| | | Exposure / Emission | · | Temperature |
| | | | · | Electromagnetic Radiation |
| | | | · | RF emission |
| | | Voltage / Current | · | Specific pattern charge depletion |
| | | Error / noise | · | Instantaneous frequency Error |
| | | | · | Phase error |
| | | | · | Amp. error |
| | | | · | Statics of Extracted Noise |
| | | Channel /location | · | Signal strength |
| | | | · | Frequency responses |
| | | | · | Channel state information |
| | BEHAVIOURAL CHARACTERISTIC | Persistent features | · | External collected behavioural source. |
| | | | · | Device design and settings |
| | | | · | Recourse utilization |
| | | | · | Event log |
| | | | · | Device history |
| | | | · | .RF- DNA |
| | | | · | Multivariate distribution |
| NETWORK | NETWORK CHARACTERISTICS | Delay /Latency | · | Handshake Delay |
| | | | · | Application Specific Delay |
| | | | · | Network delay |
| | | | · | Queueing Delay |
| | | | · | Propagation delay |
| | | | · | Transmission delay |
| | | | · | Processing Delay |
| | | Access Time Slots | · | NOMA protocol with Time Slot |
| | | IP Traffic | · | NetFlow |

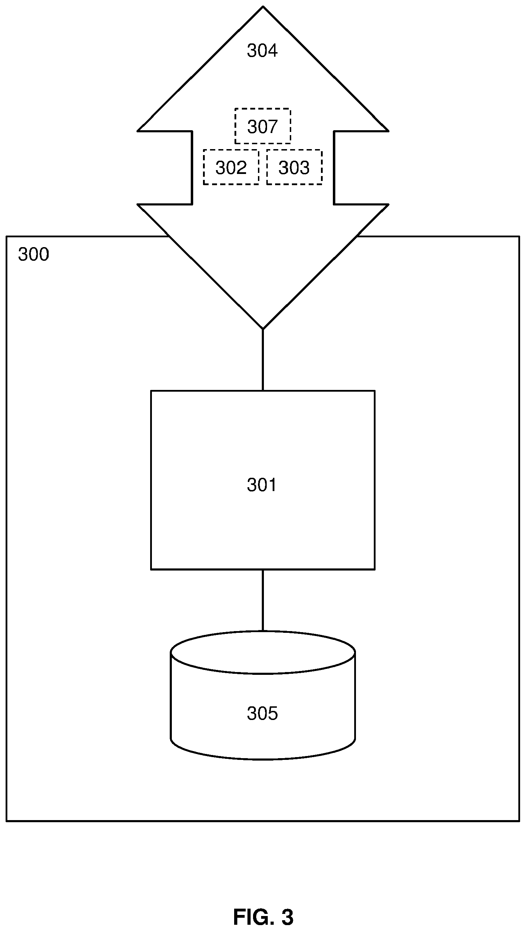

Figure 3 schematically illustrates an example data processing system (DPS) 300 capable of performing any of the methods 100 of Figures 1 or 2. It comprises a processor 301 operably coupled to both a memory 305 and an interface (I/O) 304.

The interface 304 can comprise a transmitter 302 configured to transmit messages. The transmitter 302 can comprise one or more wireless transmitter modules and/or one or more wired transmitter modules.

The interface 304 can comprise a receiver 303 configured to receive messages. The receiver 303 can comprise one or more wireless transmitter modules and/or one or more wired transmitter modules.

The memory 305 can optionally comprise computer program instructions which, when the program is executed by the processor 301, cause the data processing system 300 to carry out the method 100. Alternatively, or additionally, the interface 304 can optionally comprise a physical interface 307 configured to receive a data carrier having such instructions stored thereon. Alternatively, or additionally, the receiver 303 can be configured to receive a data carrier signal carrying such instructions.

The steps of the methods described herein may be carried out in any suitable order, or simultaneously where appropriate. The arrows between boxes in the figures show one example sequence of method steps but are not intended to exclude other sequences or the performance of multiple steps in parallel. Additionally, individual blocks may be deleted from any of the methods without departing from the spirit and scope of the subject matter described herein. Aspects of any of the examples described above may be combined with aspects of any of the other examples described to form further examples without losing the effect sought. Where elements of the figures are shown connected by arrows, it will be appreciated that these arrows show just one example flow of communications (including data and control messages) between elements. The flow between elements may be in either direction or in both directions. Where the description has explicitly disclosed in isolation some individual features, any apparent combination of two or more such features is considered also to be disclosed, to the extent that such features or combinations are apparent and capable of being carried out based on the present specification as a whole in the light of the common general knowledge of a person skilled in the art, irrespective of whether such features or combinations of features solve any problems disclosed herein. In view of the foregoing description, it will be evident to a person skilled in the art that various modifications may be made within the scope of the invention.

The preceding description is presented to enable any person skilled in the art to make and use the system and/or perform the method of the invention and is provided in the context of a particular application. Various modifications to the disclosed examples will be readily apparent to those skilled in the art. It is intended that the specification be considered as exemplary only.

Where this application lists one or more method steps, the presence of precursor, follow-on and intervening method steps is not excluded unless such exclusion is explicitly indicated. Similarly, where this application lists one or more components of a device or system, the presence of additional components, whether separate or intervening, is not excluded unless such exclusion is explicitly indicated.

In addition, where this application has listed the steps of a method or procedure in a specific order, it could be possible, or even expedient in certain circumstances, to change the order in which some steps are performed, and it is intended that the particular steps of the method or procedure claims set forth herein not be construed as being order-specific unless such order specificity is expressly stated in the claim. That is, the operations/steps may be performed in any order, unless otherwise specified, and embodiments may include additional or fewer operations/steps than those disclosed herein. It is further contemplated that executing or performing a particular operation/step before, partially or entirely contemporaneously with, or after another operation is in accordance with the described embodiments.

The scope of the present invention includes any novel features or combination of features disclosed herein. The applicant hereby gives notice that new claims may be formulated to such features or combination of features during prosecution of this application or of any further applications derived therefrom. In particular, with reference to the appended claims, features from dependent claims may be combined with those of the independent claims and features from respective independent claims may be combined in any appropriate manner and not merely in the specific combinations enumerated in the claims.

Insofar as embodiments of the invention described are implementable, at least in part, using a software-controlled programmable processing device, such as a microprocessor, digital signal processor or other processing device, data processing apparatus or system, it will be appreciated that a computer program for configuring a programmable device, apparatus or system to implement the foregoing described methods is envisaged as an aspect of the present invention. Such a computer program may be embodied as source code or undergo compilation for implementation on a processing device, apparatus or system or may be embodied as object code, for example.

Such a computer program may be encoded as executable instructions embodied in a carrier medium, non-transitory computer-readable storage device and/or a memory device in machine or device readable form, for example in volatile memory, non-volatile memory, solid-state memory, magnetic memory such as disk or tape, optically or magneto-optically readable memory such as magnetic tape, compact disk (CD), digital versatile disk (DVD) or other media that are capable of storing code and/or data. Such a computer program may alternatively or additionally be supplied from a remote source embodied in a communications medium such as an electronic signal, radio frequency carrier wave or optical carrier wave. Such carrier media are also envisaged as aspects of the present invention.

Such instructions, when executed by a processor (or one or more computers, processors, and/or other devices) may cause the processor (the one or more computers, processors, and/or other devices) to perform at least a portion of the methods described herein.

Where a processor is referred to herein, this is to be understood to refer to a single processor or multiple processors operably connected to one another. Similarly, where a memory is referred to herein, this is to be understood to refer to a single memory or multiple memories operably connected to one another.

The methods and processes can also be partially or fully embodied in hardware modules or apparatuses or firmware, so that when the hardware modules or apparatuses are activated, they perform the associated methods and processes. The methods and processes can be embodied using a combination of code, data, and hardware modules or apparatuses.

Examples of processing systems, environments, and/or configurations that may be suitable for use with the embodiments described herein include, but are not limited to, embedded computer devices, personal computers, server computers (specific or cloud (virtual) servers), hand-held or laptop devices, multiprocessor systems, microprocessor-based systems, set top boxes, programmable consumer electronics, mobile telephones, smartphones, tablets, network personal computers (PCs), minicomputers, mainframe computers, distributed computing environments that include any of the above systems or devices, and the like. Hardware modules or apparatuses described in this disclosure include, but are not limited to, application-specific integrated circuits (ASICs), field-programmable gate arrays (FPGAs), dedicated or shared processors, and/or other hardware modules or apparatuses.

User devices can include, without limitation, static user devices such as PCs and mobile user devices such as smartphones, tablets, laptops and smartwatches.

Receivers and transmitters as described herein may be standalone or may be comprised in transceivers. A communication link as described herein comprises at least one transmitter capable of transmitting data to at least one receiver over one or more wired or wireless communication channels. Wired communication channels can be arranged for electrical or optical transmission. Such a communication link can optionally further comprise one or more relaying transceivers.

User input devices can include, without limitation: microphones, buttons, keypads, touchscreens, touchpads, trackballs, joysticks, mice, gesture control devices and brain control (e.g. electroencephalography, EEG) devices. User output devices can include, without limitation: speakers, buzzers, display screens, projectors, indicator lights, haptic feedback devices and refreshable braille displays. User interface devices can comprise one or more user input devices, one or more user output devices, or both.

## Claims

1. A computer-implemented method for authenticating a first device in a network of devices, the method comprising:
performing an authentication procedure to attempt to authenticate the first device;
determining that the authentication procedure has failed to authenticate the first device;
determining that a second device is connected to the first device;
requesting authentication of the first device by the second device;
receiving an authentication response from the second device; and
if the second device verifies the first device in response to receiving the authentication response, authenticating the first device.

2. The computer-implemented method of claim 1, wherein the second device has an authentication strength greater than or equal to the first device's authentication strength.

3. The computer-implemented method of claim 2, wherein the authentication strength of a device is based on at least one device metric.

4. The computer-implemented method of claim 3, wherein the at least one device metric comprises any of channel state information, device-configuration, battery information, clock offset or clock skewness.

5. The computer-implemented method of either of any preceding claim, wherein the first and second devices are different.

6. The computer-implemented method of any preceding claim, wherein the second device is selected from a plurality of devices based on one or both of:
proximity to the first device, and
authentication strength.

7. The computer-implemented method of claim 6, wherein the proximity of the first device is determined by Bluetooth and/or GPS.

8. A computer system including a processor and memory storing computer program code for performing the steps of any preceding claim.

9. A computer program element comprising computer program code to, when loaded into a computer system and executed thereon, cause the computer to perform the steps of a method as claimed in any of claims 1 to 7.
